# EUROPEAN PATENT APPLICATION

(11) **EP 4 141 279 A1**
(43) Date of publication of application: **01.03.2023**
(21) Application number: 21793710.1
(22) Date of filing: 08.04.2021
(51) Int. Cl.: F16C 33/20, C08K 5/51, C08L 23/06, C08L 23/26, C08L 27/18, C08L 77/00

(54) **POLYAMIDE RESIN COMPOSITION AND SLIDING MEMBER**

(30) Priority: 21.04.2020 JP 2020075751
(71) Applicant: Oiles Corporation, Tokyo 108-0075 (JP)
(72) Inventor: TAKAHASHI, Kohei, Fujisawa-shi, Kanagawa 252-0811 (JP)
(74) Representative: Strehl Schübel-Hopf & Partner
(86) International application number: PCT/JP2021/014963
(87) International publication number: WO 2021/215264

(57) **Abstract**

The present invention provides a polyamide resin composition (nylon composition) and a sliding member using this, which have excellent moldability and sliding properties. The polyamide resin composition contains, as additives, polyethylene resin of 5 to 20% by mass, polytetrafluoroethylene resin of 5 to 30% by mass, modified polyolefin resin of 0.5 to 5% by mass, and phosphate of 1 to 5% by mass, in addition to polyamide resin that is a main component. The sliding member is produced by molding this polyamide resin composition.

## Description

### Technical Field

The present invention relates to a polyamide resin composition and a sliding member such as a bearing with excellent friction and wear characteristics.

### Background Art

Polyamide resin (hereinafter abbreviated as "nylon") is widely used in fields such as machinery, automobiles, electric / electronic parts, and household electrical appliances, etc., due to its excellent moldability, heat resistance, toughness, chemical resistance, wear resistance, etc. However, since nylon alone cannot obtain sufficient friction and wear characteristics in sliding applications such as a slide bearing, it is indispensable to mix solid lubricants such as graphite, molybdenum disulfide, and polytetrafluoroethylene (hereinafter abbreviated as "PTFE"), or lubricants such as mineral oil and wax.

For the purpose of imparting slidability to nylon, for example, in Patent Literature 1, it is proposed a synthetic resin composition for the sliding member in which PTFE is blended with nylon. Further, in Patent Literature 2, it is proposed a nylon composition in which molybdenum disulfide is blended with nylon.

However, the nylon containing PTFE suppresses decrease in rigidity during water absorption and improves friction and wear characteristics, but has a problem that heat resistance and mechanical strength are significantly reduced. Further, the nylon containing the molybdenum disulfide has a problem of lowering friction and wear characteristics due to decrease in rigidity due to water absorption.

In order to solve the decrease in dimensional accuracy due to water absorption that is a drawback of nylon itself, a technique of blending inorganic filler has been proposed. However, when the inorganic filler is blended with nylon, there is a problem that the inorganic filler becomes abrasive grains due to wear and intervenes on the sliding surface in sliding with the mating material, causing abrasive wear.

It has been proposed to add polyethylene resin to nylon in order to improve the abrasive wear. For example, in Patent Literature 3, it is proposed a resin composition containing nylon, inorganic filler (mica) and high-density polyethylene resin having a molecular weight of 50,000 - 400,000. Further, in Patent Literature 4, it is proposed a nylon composition consisting of nylon, wollastonite, modified styrene-based copolymer, and modified high density polyethylene with a molecular weight of 50,000-400,000.

However, in Patent Literature 3, nylon containing polyethylene resin tends to easy peel off polyethylene resin from the surface layer of the molded product. And as a result, molding conditions for obtaining a molded product having a good appearance are narrowed, and there is a problem that it may be accompanied by great difficulty. Further, in Patent Literature 4, since modified styrene-based copolymer and modified high-density polyethylene are blended, there is a problem that fluidity at the time of molding may be deteriorated, and as a result, moldability may be deteriorated.

### Citation List

### Patent Literature

Patent Literature 1: Japanese Unexamined Patent Application Laid-Open No. H2-219849
Patent Literature 2: Japanese Unexamined Patent Application Laid-Open No. S63-207851
Patent Literature 3: Japanese Unexamined Patent Application Laid-Open No. H5-263560
Patent Literature 4: Japanese Unexamined Patent Application Laid-Open No. H6-345961

### Summary of Invention

### Technical Problem

The nylon composition previously proposed has severe molding conditions at the time of molding, and the molded product (sliding member) made of the nylon composition has insufficient friction and wear characteristics. In view of the above circumstances, an object of the present invention is to provide a nylon composition (polyamide resin composition) and a sliding member that have excellent moldability and sliding properties.

### Solution to Problem

A nylon composition of the present invention contains, as additives, polyethylene resin of 5 to 20% by mass, polytetrafluoroethylene resin of 5 to 30% by mass, modified polyolefin resin of 0.5 to 5% by mass, and phosphate of 1 to 5% by mass, in addition to nylon that is a main component.

According to the nylon composition of the present invention, molding material made of this nylon composition has good biting property into a screw of a molding machine and excellent molding processability, and there is no peeling on a surface of a molded product, therefore, the surface of the molded product has an excellent surface condition. According to the sliding member made of this nylon composition, original mechanical properties of nylon are not impaired, and regarding sliding friction with opposite member, sliding characteristics including low friction and wear resistance can be significantly improved.

The nylon composition of the present invention may contain, as additional components, lubricant in a proportion of 0.1 to 1% by mass and antioxidant in a proportion of 0.1 to 2% by mass. Further, the nylon composition of the present invention may contain, as additional component, organic particles or organic fibers in a proportion of 1 to 40% by mass.

The lubricant as the additional component serves as a mold release agent that improves mold release property from a mold during molding of the nylon composition. And the antioxidant serves to prevent oxidative deterioration during molding of the nylon composition. Further, the organic particles or fibers serves significantly improving the sliding properties including low friction and wear resistance without lowering mechanical strength of the molded product (sliding member) made of the nylon composition.

### Advantageous Effects of Invention

According to the present invention, it can provide the nylon composition and the sliding member that have good molding processability such as biting property into the screw of the molding machine, and that significantly improve the sliding properties including low friction and wear resistance without impairing original mechanical properties of nylon.

### Brief Description of Drawings

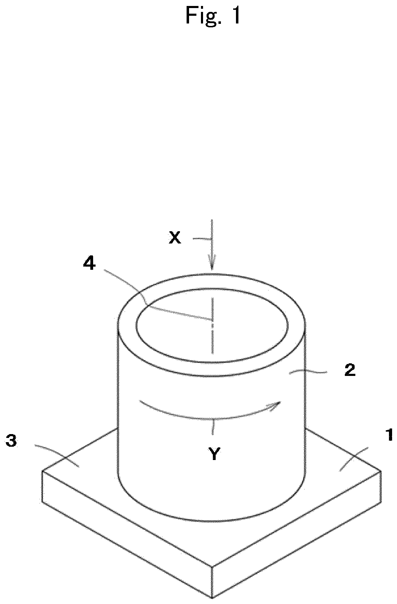

Fig. 1 is a perspective explanation view for explaining a thrust test method.

### Description of Embodiments

The nylon composition of the present invention contains, as additives, polyethylene resin of 5 to 20% by mass, polytetrafluoroethylene resin of 5 to 30% by mass, modified polyolefin resin of 0.5 to 5% by mass, and phosphate of 1 to 5% by mass, in addition to polyamide resin that is the main component.

In the nylon composition of the present invention, nylon that is the main component is polymer having an amide bond (-NH-CO-) in a main chain, and is polymer containing a structural unit derived from a monomer component such as aminocarboxylic acid (amino acid), diamine, and dicarboxylic acid, etc. The nylon may consists of one type of a structural unit (polymer of aminocarboxylic acid) or multiple types of structural units (copolymer of diamine and dicarboxylic acid, copolymer of diamine, dicarboxylic acid and aminocarboxylic acid, etc.).

Examples of the aminocarboxylic acid include 6-aminocaproic acid, 7-aminoheptanoic acid, 8-aminooctanoic acid, 9-aminononanoic acid, 10-aminodecanoic acid, 11-aminoundecanoic acid, 12-aminododecanoic acid, p(para)-amino benzoic acid, and p(para)-aminomethyl benzoic acid, etc. Examples of lactam include ε-caprolactam, undecane lactam, and ω-laurolactam, etc. These can be used alone or in combination of two or more.

Examples of the diamine include aliphatic diamine such as ethylenediamine, trimethylenediamine, tetramethylenediamine, pentamethylenediamine, hexamethylenediamine, heptamethylenediamine (1,7-diaminoheptane), octamethylenediamine (1,8-diaminooctane), nonamethylenediamine (1,9-diaminononan), decamethylenediamine (1,10-diaminodecane), undecamethylenediamine (1,11-diaminoundecane), dodecamethylenediamine (1,12-diaminododecane), tridecamethylenediamine, tetradecamethylenediamine, pentadecamethylenediamine, hexadecamethylenediamine, heptadecamethylenediamine, octadecamethylenediamine, nonadecamethylenediamine, eikosamethylenediamine, 2-methyl-1,5-diaminopentane, 3-methyl-1,5-diaminopentane, 2-methyl-1,8-octanediamine, 2,2,4-trimethylhexamethylenediamine, 2,4,4-trimethylhexamethylenediamine, and 5-methyl-1,9-nonandamine, etc.; alicyclic diamine such as 1,2-cyclohexanediamine, 1,3-cyclohexanediamine, 1,4-cyclohexanediamine, 1,3-bis (aminomethyl) cyclohexane, 1,4-bis (aminomethyl) cyclohexane, bis (4-aminocyclohexyl) methane, bis (4-aminocyclohexyl) propane, bis (3-methyl-4-aminocyclohexyl) methane, bis (3-methyl-4-aminocyclohexyl) propane, 1,3-bisaminomethylcyclohexane, 1,4-bisaminomethylcyclohexane, 5-amino-2,2,4-trimethyl-1-cyclopentanmethylamine, 3-aminomethyl-3,5,5-trimethylcyclohexylamine (isophoronediamine), bis (aminopropyl) piperazine, bis (aminoethyl) piperazine, norbornandimethyleneamine, and tricyclodecanedimethylamine, etc.; aromatic diamine such as p-phenylenediamine, o (ortho) -phenylenediamine, m-phenylenediamine, p-xylylenediamine, o-xylylenediamine, and m-xylylenediamine, etc. These can be used alone or in combination of two or more.

Examples of the dicarboxylic acids include aliphatic dicarboxylic acid such as adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, octadecanedioic acid, and eicosandioic acid, etc.; alicyclic dicarboxylic acid such as 1,3-cyclohexanedicarboxylic acid, 1,4-cyclohexanedicarboxylic acid, dicyclohexanemethane-4,4'-dicarboxylic acid, and norbornanedicarboxylic acid, etc.; aromatic dicarboxylic acid such as isophthalic acid, terephthalic acid, 1,4-naphthalenedicarboxylic acid, 1,8-naphthalenedicarboxylic acid, 2,6-naphthalenedicarboxylic acid, and 2,7-naphthalenedicarboxylic acid, etc. These can be used alone or in combination of two or more.

Specific examples of the nylon used in the present invention include aliphatic nylon with a melting point of 150 ° C or higher and excellent heat resistance and strength such as polycaproamide (nylon 6), polyhexamethyleneadipamide (nylon 66), polytetramethyleneadipamide (nylon 46), polytetramethylenesebacamide (nylon 410), polypentamethyleneadipamide (nylon 56), polypentamethylenesebacamide (nylon 510), polyhexamethylenesebacamide (nylon 610), polyhexamethylenedodecamide (nylon 612), polydecamethyleneadipamide (nylon 106), polydecamethylenesebacamido (nylon 1010), polydecamethylenedodecamide (nylon 1012), polyundecaneamide (nylon 11), polydodecaneamide (nylon 12), polycaproamide / polyhexamethyleneadipamide copolymer (nylon 6/66), etc., and semi-aromatic nylon obtained by polymerization of aliphatic and / or alicyclic diamine and aromatic carboxylic acid, aromatic diamine and aliphatic and / or alicyclic dicarboxylic acid, mixtures thereof, or lactam or aminocarboxylic acid thereof such as polyhexamethylene terephthalamide (nylon 6T), polycaproamide / polyhexamethyleneterephthalamide copolymer (nylon 6/6T), polyhexamethyleneadipamide / polyhexamethylene terephthalamide copolymer (nylon 66/6T), polyhexamethyleneisophthalamide (nylon 6I), polyhexamethyleneadipamide / polyhexamethylene isophthalamide copolymer (nylon 66/6I), polyhexamethyleneterephthalamide / polyhexamethylene sophthalamide copolymer (nylon 6T/6I), polyhexamethyleneterephthalamid / polyundecaneamide copolymer (nylon 6T/11), polyhexamethylene terephthalamide / polydodecaneamide copolymer (nylon 6T/12), polyhexamethyleneadipamide / polyhexamethyleneterephthalamide / polyhexamethyleneisophthalamide copolymer (nylon 66/6T/6I), polyxylyleneadipamide (Nylon XD6), polyxylylenesebacamide (Nylon XD10), polymethaxylylenadipamide (nylon MXD6), polymethaxylylenesebacamide (nylon MXD10), polynonamethyleneterephthalamide (nylon 9T), polydecamethyleneterephthalamide (nylon 10T), polyundecamethyleneterephthalamide (nylon 11T), and polydodecamethyleneterephthalamide (nylon 12T), etc.

In the present invention, among the above-mentioned various nylons, plant-derived nylon can be used. The plant-derived nylon is resin using monomer obtained from a plant-derived component such as vegetable oil. Therefore, the plant-derived nylon is desirable from the viewpoint of environmental protection (carbon neutral viewpoint). Examples of the plant-derived nylon include nylon 11 having a structure in which monomer (aminoundecanoic acid) having 11 carbon atoms is bonded via amide bond, nylon 610 having a structure in which monomer (hexamethylenediamine) having 6 carbon atoms and monomer (sevacinic acid) having 10 carbon atoms are bonded via amide bond, nylon 612 having a structure in which monomer (hexamethylenediamine) having 6 carbon atoms and monomer (dodecanedioic acid) having 12 carbon atoms are bonded via amide bond, nylon 1010 having a structure in which monomer (decamethylenediamine) having 10 carbon atoms and monomer (sevacinic acid) having 10 carbon atoms are bonded via amide bond, nylon 1012 having a structure in which monomer (decamethylenediamine) having 10 carbon atoms and monomer (dodecanedioic acid) having 12 carbon atoms are bonded via amide bond, and nylon 10T having a structure in which monomer (decamethylenediamine) having 10 carbon atoms and terephthalic acid are bonded via amide bond.

The PTFE blended in the nylon composition of the present invention serves to impart low friction to a sliding member made of the nylon composition. In the PTFE, PTFE (molding powder, fine powder) for molding and PTFE for lubricating additives are exist. The PTFE for molding usually has a molecular weight of several million to 10 million (high molecular weight PTFE), and it easily becomes fibrous when a force is applied before sinter. By this reason, it cannot be used as a lubricating additive. Therefore, in the present invention, it is used PTFE for lubricating such as low molecular weight PTFE having a molecular weight of several hundred thousand or less to suppress the property of fibrosis, or the high molecular weight PTFE pulverized after molding and sinter forming.

Examples of the PTFE for lubricating additive include "TLP10F-1 (product name)", etc. manufactured by Chemours-Mitsui Fluoroproducts Co., Ltd., "Lubron L-5 (product name)", etc. manufactured by DAIKIN INDUSTRIES, LTD., "FluonFluon L150J (product name)", "Fluon L169J (product name)", "Fluon L170J (product name)" (Product name) ", etc. manufactured by AGC Inc., "KTL620 (product name)", "KTL610 (product name)", "KT300M" (product name), "KT400M (product name)", "KT600M (product name)", etc. manufactured by KITAMURA LIMITED, "TF9201Z (product name)","TF9202Z (product name)","TF9027Z (product name)" , etc. manufactured by 3M Company.

The blending amount of this PTFE is 5 to 30% by mass, preferably 10 to 25% by mass. If the blending amount is less than 5% by mass, low friction is not sufficiently imparted. On the other hand, if the blending amount exceeds 30% by mass, the moldability of the resin composition for sliding member may be deteriorated.

The polyethylene resin blended in the nylon composition of the present invention serves to improve the slidability such as friction and wear characteristics of the sliding member made of the nylon composition. As polyethylene resin, high-density polyethylene resin, ultra-high molecular weight polyethylene resin, acid-modified ultra-high molecular weight polyethylene resin, etc. are used. As the acid-modified ultra-high molecular weight polyethylene resin, maleic anhydride-modified ultra-high molecular weight polyethylene resin is preferable.

The high density polyethylene resin (HDPE) is homopolymer of ethylene produced by the medium / low pressure method, and its density is usually 0.940 to 0.970 g/cm³. Examples of the high density polyethylene resin include "HI-ZEX (product name)" manufactured by Prime Polymer Co., Ltd., "Novatec (product name)" manufactured by Japan Polyethylene Corporation, etc. As the ultra-high molecular weight polyethylene resin (UHPE), it can be used polyethylene resin which has ultimate viscosity [η] of 10 dl/g or more measured in decalic acid solvent at 135 °C and has viscosity average molecular weight of 500,000 to 6,000,000. Examples of the ultra-high molecular weight polyethylene resin include "HI-ZEX Million (product name)" manufactured by Mitsui Chemicals, Inc., "MIPELON (product name)" manufactured by Mitsui Chemicals, Inc., and "SUNFINE (product name)" manufactured by Asahi Kasei Corp. Further, as the ultra-high molecular weight polyethylene resin, it can be used polyethylene resin, which consists of ultra-high molecular weight polyethylene resin having ultimate viscosity [η] of 10 to 40 dl/g at 135 °C, and low molecular weight or high molecular weight polyethylene resin that have ultimate viscosity [η] of 0.1 to 5 dl/g at 135 °C. Examples of the ultra-high molecular weight polyethylene resin include "Lubmer (product name)" manufactured by Mitsui Chemicals, Inc. Examples of acid-modified ultra-high molecular weight polyethylene resin include "Modified lubemer (product name)" manufactured by Mitsui Chemicals, Inc., which is modified with maleic anhydride.

Further, in the present invention, as thepolyethylene resin, it can be used homopolymer of plant-derived ethylene derived from bioethanol obtained from plants such as sugar cane and corn, or copolymer of this plant-derived ethylene and another monomer. When plant-derived nylon having the biomass degree of 100% or less is used as nylon that is a main component of the plant-derived polyethylene resin, the plant-derived nylon serves to improve the biomass degree of its nylon composition. Examples of this plant-derived polyethylene resin include green polyethylene "SLL118, SLL218, SGM9450F, SHA7260, SHE150, SGF4950 (all product names)" manufactured by Braskem S.A.

The polyethylene resin is selected one type or two or more types above described, and the blending amount is 5 to 20% by mass, preferably 5 to 15% by mass. If the blending amount is less than 5% by mass, there is no effect in improving the sliding characteristics of the sliding member made of the nylon composition. On the other hand, if the blending amount exceeds 20% by mass, the dispersion ratio in nylon as the main component increases, therefore the wear resistance may be deteriorated.

The modified polyolefin resin blended in the nylon composition of the present invention is modified polyolefin resin into which an acid group capable of exhibiting an interaction with nylon that is the main component of the nylon composition is introduced. The modified polyolefin resin acts as a compatibilizer that finely disperses polyethylene resin being insoluble in nylon, in the nylon matrix. Further, the modified polyolefin resin significantly improves the sliding properties including low friction and wear resistance without reducing the mechanical strength of the molded product (sliding member) made of the nylon composition.

The modified polyolefin resin is selected from unsaturated carboxylic acid, polyolefin resin graft-modified with anhydride thereof or derivative thereof, and polyolefin resin saponified obtained by saponifying polyolefin resin having an acetoxy group in a molecular chain by alkali. Examples of the polyolefin resin include homopolymer of α-olefin, copolymer of two or more kinds of α-olefin, or copolymer of α-olefin and other compound copolymerizable with α-olefin. Examples of α-olefin include α-olefin having 2 to 20 carbon atoms such as ethylene, propylene, 1-butene, 1-hexene, 4-methyl-1-pentene, 1-octene, 1-decene, 1-dodecene, 1-tetradecene, 1-hexadecene, 1-octadecene, and 1-eikosen, etc. And, examples of the other compound include vinyl acetate, acrylic acid ester, and a compound having polyunsaturated bond such as conjugated diene and nonconjugated diene.

Suitable examples of the polyolefin resin include low density, medium or high density polyethylene, linear low density polyethylene, polypropylene, and α-olefin copolymer (ethylene-propylene copolymer (EPR), ethylene-vinyl acetate copolymer (EVA), ethylene-butene copolymer (EBR), ethylene-hexene copolymer, ethylene-octene copolymer, ion-bridged olefin copolymer (ionomer), etc.).

The unsaturated carboxylic acid, the anhydride thereof or the derivative thereof is a compound having ethylenically unsaturated bond and a carboxyl group, acid anhydride or a derivative group in one molecule. Specific examples of the unsaturated carboxylic acid include: unsaturated carboxylic acid such as acrylic acid, methacrylic acid, α-ethylacrylic acid, maleic acid, fumaric acid, tetrahydrophthalic acid, methyltetrahydrophthalic acid, itaconic acid, citraconic acid, crotonic acid, isocrotonic acid, endosis-bicyclo[2.2.1]hept-2,3-dicarboxylic acid (nagic acid), methyl-endosis-bicyclo[2.2.1]hept-5-en-2,3-dicarboxylic acid (methylnadic acid); anhydride of these unsaturated carboxylic acids; and derivative such as unsaturated carboxylic acid halid, unsaturated carboxylic acid amide, and unsaturated carboxylic acid imide. More specifically, malenyl chloride, maleimide, N-phenylmaleimide, maleic anhydride, itaconic anhydride, citraconic anhydride, monomethyl maleate, dimethyl maleate, glycidyl maleate, etc. can be mentioned. Among these, acrylic acid, methacrylic acid, maleic acid, maleic anhydride, and itaconic anhydride are preferable, and maleic anhydride is particularly preferable.

Examples of the polyolefin resin modified with maleic anhydride include maleic anhydride-modified polyethylene resin, maleic anhydride-modified polypropylene resin, maleic anhydride-modified ethylene-α-olefin copolymer (ethylene-propylene copolymer, ethylene-vinyl acetate copolymer, ethylene-butene copolymer, ethylene-hexene copolymer, ethylene-octene copolymer, etc.), maleic anhydride-modified styrene-ethylene/butylene-styrene copolymer (SEBS).

Preferable example of the polyolefin resin saponified is ethylene-vinyl acetate copolymer saponified.

The modified polyolefin resin used in the present invention conforms to JIS K7210 (2014). Further, in the modified polyolefin resin used in the present invention, melt flow rate (MFR) measured at temperature of 190 °C or 230 °C under load of 2.16 kg is preferably 0.1 to 100 g/10 minutes, and more preferably 0.1 to 50 g/10 minutes. If the melt flow rate is less than 0.1 g/10 minutes, viscosity becomes too high and fluidity of the nylon composition is poor, which may deteriorate moldability of melt extrusion molding, etc. On the other hand, if the melt flow rate exceeds 100 g/10 minutes, the moldability becomes unstable, and the mechanical strength and heat resistance of the molded product may be lowered.

Specific examples of the modified polyolefin resin used in the present invention are shown below. Examples of the maleic anhydride-modified polyethylene resin and the maleic anhydride-modified polypropylene resin include "ADMER NF518 (product name), ADMER QE800 (product name)" manufactured by Mitsui Chemicals, Inc. and "Modic (product name)" manufactured by Mitsubishi Chemical Corporation. Examples of the maleic anhydride-modified ethylene-propylene copolymer include "TAFMER MP0610 (product name), TAFMER MP0620 (product name)" manufactured by Mitsui Chemicals, Inc. Examples of themaleic anhydride-modified ethylene-butene copolymer include "TAFMER MH7010 (product name), TAFMER MH7020 (product name)" manufactured by Mitsui Chemicals, Inc. Examples of the maleic anhydride-modified styrene-ethylene / butylene-styrene copolymer include "Tuftec (product name)" manufactured by Asahi Kasei Chemicals Co., Ltd., "SEPTON (product name)" manufactured by Kuraray Co., Ltd., and "KRATON (product name)" manufactured by Kraton Polymer Japan Corp. Examples of the ethylene-vinyl acetate copolymer saponified include "Technolink (product name)" manufactured by Taoka Chemical Co., "Mersen" (product name) manufactured by Toso, "Eval" (product name) manufactured by Kuraray Co., Ltd., and "Soarnol (product name)" manufactured by Mitsubishi Chemical Corporation.

The blending amount of the modified polyolefin resin is 0.5 to 5% by mass, preferably 1 to 3% by mass. If the blending amount is less than 0.5% by mass, load bearing capacity and sliding characteristics of the molded product made of the nylon composition are not improved. On the other hand, if the blending amount exceeds 5% by mass, moldability of the nylon composition may be deteriorated.

The phosphate contained in the nylon composition of the present invention is not itself a substance exhibiting lubricity like solid lubricant such as graphite or molybdenum disulfide. However, by blending the phosphate in the nylon composition, it promotes film-forming property of lubricating film such as PTFE on an opposite member surface (sliding surface) in sliding with the opposite member, and it improves wear resistance of a molded product (sliding member) made of the nylon composition. Further, since a molded product of the nylon composition containing the phosphate is not easily affected by the surface roughness of the opposite member, it can be applied to applications requiring abrasive wear resistance.

By blending a small amount of the phosphate, for example, 1% by mass, the effect of promoting the film-forming property of the lubricating film begins to appear, and the effect is maintained up to 5% by mass. However, if the blending amount of the phosphate is more than 5% by mass, the amount of the lubricating film formed on the surface of the opposite member becomes too large, and the wear resistance is rather lowered. Therefore, the blending amount of the phosphate is 1 to 5% by mass, preferably 1 to 3% by mass.

Preferred examples of the phosphate include metal salt selected among group of metal salt of orthophosphoric acid, pyrophosphoric acid, and metaphosphoric acid, and a mixture thereof. In particular, orthophosphate (particularly secondary phosphate and tertiary phosphate) of alkali metal and alkaline earth metal, pyrophosphate and metaphosphate are preferred. As the alkali metal and the alkaline earth metal, lithium, calcium and magnesium are particularly preferable. Specific examples of them include lithium tertiary phosphate, calcium tertiary phosphate, calcium hydrogenphosphate or anhydride, magnesium hydrogenphosphate or anhydride, lithium pyrophosphate, calcium pyrophosphate, magnesium pyrophosphate, lithium metaphosphate, calcium metaphosphate, and magnesium metaphosphate, etc.

In the nylon composition of the present invention, lubricant and antioxidant may be added as additional components. Furthermore, organic particles or organic fibers may be blended as additional components.

The lubricant acts as a mold release agent that is blended with the nylon composition and improves the mold release property of the nylon composition at the time of molding. Examples of the lubricant include hydrocarbon-based wax such as paraffin wax, micro wax, polyethylene wax, and polyethylene oxide wax, sodium of higher fatty acid having 12 or more carbon atoms such as lauric acid, myristic acid, palmitic acid, stearic acid, arachidic acid, behenic acid, ricinoleic acid, and naphthenic acid, etc., higher fatty acid metal salt that is metal salt such as magnesium, aluminum, calcium, barium, zinc, etc., and higher fatty acid amide having 12 or more carbon atoms such as stearic acid amide, oleic acid amide, erucic acid amides, ethylenebisoleic acid amide, ethylene bis stearic acid amide, and methylene bisstearic acid amide. In particular, from the viewpoint of mold release property, the lubricant having a melting point of 120 °C to 155 °C is preferable. Examples of such lubricant include ethylene bis stearic acid amide, zinc stearate, polyethylene wax, and polyethylene oxide wax.

The blending amount of the lubricant is 0.1 to 1% by mass, preferably 0.3 to 0.5% by mass. If the blending amount is less than 0.1% by mass, the effect as the mold release agent is not exhibited. On the other hand, even if the blending amount exceeds 1% by mass, the mold release property is not improved.

Examples of the antioxidant as an additional component include phenolic-based antioxidant and phosphite-based antioxidant. Only one type of antioxidant may be used, or two or more types may be used in combination. The phenolic-based antioxidant is excellent in antioxidant performance at low temperatures, in addition to the effect of improving antioxidant performance at high temperatures.

Examples of the phenolic-based antioxidant include 2,2'-methylenebis (4-methyl-6-tertbutylphenol), 4,4'-methylenebis (2,6-di-tertbutylphenol), 1,1,3-Tris (2-methyl-4-hydroxy-5-tert-butylphenyl) butane, 4,4'-butylidenevis (3-methyl-6-tert-butylphenol), 1,3,5-trimethyl-2,4,6-tris (3,5-di-tert-butyl-4-hydroxybenzyl) benzene, 4,4'-thiobis (3-methyl-6-tert-butylphenol), n-octadecyl-3- (4'-hydroxy-3', 5'-di-tert-butylphenyl) propionate, n-octadecyl-2- (4'-hydroxy-3', 5'-di-tert-butylphenyl) propionate, 1,6-hexanediol-bis [3- (3,5-di-tert-butyl-4-hydroxyphenyl) propionate], triethyleneglycol-bis [3- (3-tert-butyl-5-methyl-4-hydroxyphenyl) propionate], pentaerythritoltetrakis [3- (3,5-di-tert-butyl-4-hydroxyphenyl) propionate], 3,9-bis {2- [3- (3-tert-butyl-4-hydroxy-5-methylphenyl) propionyloxy] - 1,1-dimethylethyl} -2,4,8,10-tetraoxaspiro [5.5] undecane, 3,9-bis [1,1-dimethyl-2- [β- (3-tert-butyl-4-hydroxy-5-methylfienyl) propionyloxy] ethyl] 2,4,8,10-tetraoxaspiro [5,5] -undecane, 2-tert-butyl-6- (3'-tert-butyl-5'-methyl-2'-hydroxybenzyl) -4-methylphenyl acrylate, 2- [1- (2-hydroxy-3,5-di-tert-pentylphenyl) ethyl] -4,6-di-tert-pentylphenyl acrylate, di-n-octadecyl-3,5-di-tert-butyl-4-hydroxybenzylphosphonate, and N, N'-hexamethylenebis (3,5-di-tert-butyl-4-hydroxy-dihydrocinnamamide, N, N'-ethylenebis [3- (3,5-di-tert-butyl-4-hydroxyphenyl) propionamide], N, N'-tetramethylenebis [3- (3,5-di-tert-butyl-4-hydroxyphenyl) propionamide], N, N'-hexamethylenebis [3- (3,5-di-tert-butyl-4-hydroxyphenyl) propionamide], N, N'-ethylenebis [3- (3-tert-butyl-5-methyl-4-hydroxyphenyl) propionamide], N, N'-hexamethylenebis [3- (3-t-butyl-5-methyl-4-hydroxyphenyl) propionamide], N, N'-bis [3- (3,5-di-tert-butyl-4-hydroxyphenyl) propionyl] hydrazine, N, N'-bis [3- (3-tert-butyl-5-methyl-4-hydroxyphenyl) propionyl] hydrazine, 1,3,5-tris (3,5-di-tert-butyl-4-hydroxybenzyl) isocyanurate, 1,3,5-tris (4-tert-butyl-3-hydroxy-2,6-dimethylbenzyl) isocyanurate).

Of these, 4,4'-butylidenebis (3-methyl-6-tertbutylphenol), pentaerythritoltetrakis [3- (3,5-di-tert-butyl-4-hydroxyphenyl) propionate], and 3,9-bis {2- [3- (3-tert-butyl-4-hydroxy-5-methylphenyl) propionyloxy] -1,1-dimethylethyl} -2,4,8,10-tetraoxaspiro [5.5] undecane are preferably used.

Specific examples of the phenolic-based antioxidant include "ADK STAB (product name)" manufactured by ADEKA Corporation, "SUMILIZER (product name)" manufactured by SUMITOMO CHEMICAL COMPANY, LIMITED, "Irganox (product name)" manufactured by BASF SE, "KEMINOX (product name)" manufactured by Chemipro Kasei Kaisha, Ltd., and "Tominox (product name)" manufactured by YOSHITOMI PHARMACEUTICAL INDUSTRIES, LTD.

Further, examples of the phosphite-based antioxidant include triphenylphosphine, tris (nonylphenyl) phosphite, tris (2,4-di-tert-butylphenyl) phosphite, tridecylphosphite, trioctylphosphite, trioctadecylphosphite, didecylmonophenylphosphite, dioctylmonophenylphosphite, diisopropylmonophenylphosphite, monobutyldiphenylphosphite, monodecyldiphenylphosphite, monooctyldiphenylphosphite, distearyl pentaerythritol diphosphate, bis (2,6-di-tert-butyl-4-methylphenyl) pentaerythritoldiphosphite, 2,2-methylenebis (4,6-di-tert-butylphenyl) octylphosphite, bis (nonylphenyl) pentaerythritoldiphosphite, bis (2,4-di-tert-butylphenyl) pentaerythritol diphosphite, disstearyl-pentaerythritol-diphosphite, etc.

Of these, tris (nonylphenyl) phosphite, tris (2,4-di-tert-butylphenyl) phosphite, bis (2,4-di-tert-butylphenyl) pentaerythritoldiphosphite, bis (2,6-di-tert-butyl-4-methylphenyl) pentaerythritoldiphosphite are preferably used.

Specific examples of the phosphite-based antioxidant include "Irgafos (product name)" manufactured by BASF SE, "ADK STAB (product name)" manufactured by ADEKA Corporation, "JP (product name)" manufactured by Johoku Chemical Co.,Ltd., "JPP (product name)" manufactured by Johoku Chemical Co.,Ltd., and "GSY (product name)" manufactured by Osaki Industry Co.,Ltd.

The blending amount of the antioxidant is 0.1 to 2% by mass, preferably 0.2 to 1.5% by mass. If the blending amount is less than 0.1% by mass, the antioxidant effect is not exhibited. On the other hand, even if the blending amount exceeds 2% by mass, the antioxidant performance is not improved.

Examples of the organic particles and organic fibers as additional components include meta-aramid particles, para-aramid particles, meta-aramid fibers, para-aramid fibers, PBO (poly- p - phenylenebenzobisoxazole) fibers, polyarylate fibers, novoloid fibers, etc. The organic particles and organic fibers significantly improve the sliding properties including low friction and wear resistance without reducing the mechanical strength of the molded product (sliding member) made of the nylon composition.

Specific examples of the meta-aramid particles include "Conex powder (product name product name)" manufactured by TEIJIN LIMITED. Specific examples of the para-aramid particles include "Twaron (registered trademark) 5011 (product name)" manufactured by TEIJIN LIMITED. Specific examples of meta-aramid fibers include "Conex staple fiber (product name)" manufactured by TEIJIN LIMITED. Specific examples of the para-aramid fibers include "Twaron (registered trademark) 1088 (product name)" manufactured by TEIJIN LIMITED. Specific examples of PBO fibers include "ZYLOM-AS (product name)" manufactured by TOYOBO CO., LTD. Specific examples of the polyarylate fibers include "Vectran HT (product name)" manufactured by Kuraray Co., Ltd. And, specific examples of the novoloid fibers include "Kynol KF-10BT (product name)" manufactured by Gun Ei Chemical Industry Co., Ltd.

The blending amount of the organic particles or organic fibers is 1 to 40% by mass, preferably 1 to 30% by mass, and more preferably 3 to 15% by mass. If the blending amount is less than 1% by mass, the effects of improving moldability, wear resistance, and slidability are not exhibited. On the other hand, if the blending amount exceeds 40% by mass, there is a risk of deteriorating the moldability of the resin composition for sliding members, and the mechanical strength of the molded product made of the nylon composition may be deteriorated.

The nylon composition of the present invention is easily prepared by a known method generally used as a method for preparing a conventional resin composition. For example, the nylon, the polyethylene resin, the PTFE, the modified polyolefin resin, and the phosphate, or in addition to these, the lubricant and the antioxidant and the organic particles or fibers are weighed so that each of them becomes a predetermined amount. And, these are mixed by a mixer such as a henschel mixer, a super mixer, a ball mill, and a tumbler mixer to prepare a mixture. Then, the mixture is put into a uniaxial or biaxial screw type extruder and melt-kneaded to form a string-shaped molded product (strand). After that, the string-shaped molded product is cut to prepare pellets as a molding material. For another example, the polyethylene resin, the PTFE, the modified polyolefin resin, and the phosphate, or in addition to these, the lubricant and the antioxidant and the organic particles or fibers are weighed so that each of them becomes a predetermined amount. And, these are mixed by the same mixer as above to prepare a mixture. Then, the mixture is put into the uniaxial or biaxial screw type extruder and melt-kneaded to form a string-shaped molded product. After that, the string-shaped molded product is cut to prepare pellets. Then, these pellets are mixed with the nylon in a predetermined ratio to use as a molding material.

The nylon composition of the present invention has good biting property into the screw of the molding machine and excellent molding processability, and there is no peeling on the surface of the molded product, therefore, the surface of the molded product has the excellent surface condition. Further, according to the sliding member made of this nylon composition, original mechanical properties of the nylon are not impaired, and regarding sliding friction with the opposite member, the sliding characteristics including low friction resistance and wear resistance can be significantly improved.

### Example

Hereinafter, the present invention will be described in more detail with reference to Examples. However, the present invention is not limited to the following examples as long as the scope of the present invention is not exceeded. The moldability of the nylon composition, and the friction and wear characteristics of the sliding member made of the nylon composition were evaluated by the following methods.

### <Moldability (1)>

In the case that the mixtures (nylon composition) was melt-kneaded using the extruder to form the string-shaped molded product and then cut to produce pellets, presence or absence of breakage (cutting) of the string-shaped molded product, biting property into the screw, and surface condition of the pellets (generation of voids (air bubbles), etc.) were visually observed. The evaluation was made according to the evaluation criteria in Table 1.

### [Table 1]

**Table 1**

| | |
|---|---|
| ⊚ | Excellent |
| ○ | Good |
| × | Impossible |

### <Moldability (2)>

In the case that the molded products (sliding members) were molded from the pellets using the injection molding machine, releasability of the molded products from mold, and surface condition (peeling, etc.) of the molded products were visually observed. The evaluation was made according to the evaluation criteria in Table 2.

### [Table 2]

**Table 2**

| | |
|---|---|
| ⊚ | Excellent |
| ○ | Good |
| × | Impssible |

### <Friction and wear characteristics>

Friction coefficient and amount of wear were measured under conditions shown in Table 3 using a thrust tester. As shown in FIG. 1, a square bearing test piece (sliding member) 1 having a side of 30 mm and a thickness of 3 mm was fixed to a test table. Then, while applying a predetermined load from a cylinder 2 as opposite member to one surface 3 of the bearing test piece 1 in direction X orthogonal to the surface 3, the cylinder 2 was rotated in direction Y around axis 4 of the cylinder 2. And friction coefficient between the bearing test piece 1 and the cylindrical body 2 and amount of wear on the surface 3 of the bearing test piece 1 after the test were measured. The friction coefficient is shown by friction coefficient at the time of stability from 1 hour after the start of the test to the end of the test. The amount of wear is shown by amount of dimensional change of the sliding surface after 8 hours of the test time.

### [Table 3]

**Table 3**

| <Thrust test> | |
|---|---|
| Sl iding speed | 10 m/min |
| Load (surface pressure) | 100 kgf/cm² |
| Test time | 8 hours |
| Test piece | Square sl iding member |
| | (3 mm on a side, 1 mm in thickness) |
| Opposite member | Hollow cyl indrical opposite member |
| | [Carbon steel for machine structure (S45C), inner diameter 20 mm, outer diameter 25.6 mm. Length 15 mm] |
| Lubrication | No lubrication |

In the following examples, the following materials were used as nylon, polyethylene resin, PTFE, modified polyolefin resin, phosphate, lubricant, antioxidant, organic particles, and organic fibers. The following materials all indicate product names.
[A] Nylon
   (A-1) Nylon 6
      "Nylon 6 A1030JR" manufactured by UNITIKA LTD.
   (A-2) Nylon 66
      "Ultramid A" manufactured by BASF SE.
   (A-3) Nylon 12
      "DIAMID X1988" manufactured by Daicel-Evonik Corporation Ltd.
   (A-4) Nylon 46
      "Stanyl" manufactured by DSM Japan K.K.
   (A-5) Nylon 9T
      "Genestar" manufactured by Kuraray Co., Ltd.
   (A-6) Nylon 10T
      "XecoT" (biomass degree 56.4%) manufactured by UNITIKA LTD.
   (A-7) Nylon 11
      "Rilsan" (biomass degree 100%) manufactured by ARKEMA K.K.
   (A-8) Nylon 610
      "VESTAMID HS16" (biomass degree 60%) manufactured by Daicel-Evonik Corporation Ltd.
   (A-9) Nylon 1010
      "VESTAMID DS12 (biomass degree 100%)" manufactured by Daicel-Evonik Corporation Ltd.
[B] Polyethylene resin
   (B-1) High density polyethylene resin
      "HI-ZEX" manufactured by Prime Polymer Co., Ltd.
   (B-2) Ultra-high molecular weight polyethylene resin
      "MIPELON" manufactured by Mitsui Chemicals, Inc.
   (B-3) Maleic anhydride acid-modified ultra-high molecular weight polyethylene resin
      "MODIFIED LUBMER" manufactured by Mitsui Chemicals, Inc.
   (B-4) Plant-derived polyethylene resin
      "Green polyethylene" (biomass degree 94.5%) manufactured by Braskem S.A.
[C] PTFE
   "KT300M" manufactured by KITAMURA LIMITED.
[D] Modified polyolefin resin
   (D-1) Ethylene-vinyl acetate copolymer saponified
      "Technolink K431-80" manufactured by Taoka Chemical Co., Ltd. (vinyl acetate content before saponification 28 % by mass, saponification degree 80 %, MFR 4 g/10 minutes : 190 °C, load 2.16 kg).
   (D-2) Ethylene-vinyl acetate copolymer saponified
      "MELTHENE H-6051" manufactured by Tosoh Corporation (vinyl acetate content before saponification 28 % by mass, saponification degree 100 %, MFR 5.5 g/10 minutes : 190 °C, load 2.16 kg).
   (D-3) Maleic anhydride-modified polyethylene resin
      "ADMER-NF518" manufactured by Mitsui Chemicals, Inc. (MFR 2.2 g/10 minutes : 230 °C, load 2.16 kg).
   (D-4) Maleic anhydride-modified ethylene-propylene copolymer
      "TAFMER-MP0620" manufactured by Mitsui Chemicals, Inc. (MFR 0.3 g/10 minutes : 230 °C, load 2.16 kg).
   (D-5) Maleic anhydride-modified ethylene-butene copolymer
      "TAFMER-MH7020" manufactured by Mitsui Chemicals, Inc. (MFR 1.5 g/10 minutes : 230 °C, load 2.16 kg).
   (D-6) Maleic anhydride-modified styrene-ethylene / butylene-styrene copolymer
      "Tuftec H1517" manufactured by Asahi Kasei Chemicals Co., Ltd. (MFR 3.0 g/10 minutes : 230 °C, load 2.16 kg).
[E] Phosphate
   (E-1) Calcium pyrophosphate (manufactured by YONEYAMA KAGAKU KOGYO KAISHA, LTD.)
   (E-2) Magnesium metaphosphate (manufactured by Taihei Chemical Industrial Co., Ltd.)
[F] Lubricant
   (F-1) Ethylenebisstearic acid amide
      "Kaowax" (melting point 143 °C) manufactured by Kao Corporation.
   (F-2) Zinc stearate
      "Zinc stearate" (melting point 140 °C) manufactured by NITTO KASEI KOGYO K.K.
   (F-3) Polyethylene oxide wax
      "LICOWAX PED191" (melting point 123 °C) manufactured by Clariant Plastics & Coatings (Japan) K.K.
[G] Antioxidant
   (G-1) Phenolic-based antioxidant, 3,9-bis {2- [3-(3-tert-butyl-4-hydroxy-5-methylphenyl) propionyloxy] -1,1-dimethylethyl} -2,4,8,10-tetraoxaspiro [5.5] undecane
      "ADK STAB AO-80" manufactured by ADEKA Corporation.
   (G-2) Phosphite-based antioxidant, bis (2,6-di-tert-butyl-4-methylphenyl) pentaerythritoldiphosphite
      "ADK STAB PEP-36" manufactured by ADEKA Corporation.
[H] Organic particles and organic fibers
   (H-1) Meta-aramid particles
      "Conex powder" manufactured by TEIJIN LIMITED.
   (H-2) Para-aramid particles
      "Twaron (registered trademark) 5011" manufactured by TEIJIN LIMITED.
   (H-3) Meta-aramid fibers
      "Conex staple fiber" manufactured by TEIJIN LIMITED.
   (H-4) Para-aramid fibers
      "Twaron (registered trademark) 1088" manufactured by TEIJIN LIMITED.
   (H-5) PBO fibers
      "ZYLOM-AS" manufactured by TOYOBO CO., LTD.
   (H-6) Polyarylate fibers
      "Vectran HT" manufactured by Kuraray Co., Ltd.
   (H-7) Novoloid fibers
      "Kynol KF-10BT" manufactured by Gun Ei Chemical Industry Co., Ltd.

### Examples 1 - 15

As nylon that is the main component, thealiphatic nylon (A-1) to (A-4) and the semi-aromatic nylon (A-5), and as the additives, the polyethylene resins (B-1) to (B-3), the PTFE (C), the modified polyolefin resins (D-1) to (D-6), the phosphate (E-1) and (E-2), the lubricants (F-1) to (F-3), and the antioxidants (G-1) and (G-2) were prepared and weighed in the amount ratios shown in Tables 4 to 6. Next, these were mixed with the tumbler mixer to prepare the mixture. Then, the mixture was supplied to the biaxial screw vent type extruder and melt-kneaded to form the string-shaped molded product. After that, the string-shaped molded product was cut to prepare pellets, and the pellets were used as the molding material. In the manufacturing process, presence or absence of breakage (cutting) of the string-shaped molded product, biting property into the screw, and surface condition of the pellets (generation of voids, etc.) were visually observed. These evaluations are shown in the characteristics (moldability 1) of Tables 4 to 6.

Next, the molding material was supplied to the screw type injection molding machine and injection molded to produce the square type molded products (sliding members) having dimensions of 30 mm on a side and 3 mm in thickness. In the manufacturing process, releasability of the square type molded products from mold, and surface condition (peeling, etc.) of the square type molded products were visually observed. These evaluations are shown in the characteristics (moldability 2) of Tables 4 to 6. Further, the evaluation of the friction coefficient and the amount of wear of the square type molded products was performed based on the above described evaluation method. Results thereof are shown in the characteristics (sliding characteristics) of Tables 4 to 6.

### Examples 16 - 26

As nylon that is the main component, the plant-derived nylon (A-6) to (A-9), and as the additives, the polyethylene resins (B-2) to (B-4), the PTFE (C), the modified polyolefin resins (D-2) to (D-6), the phosphate (E-1) and (E-2), the lubricants (F-1) to (F-3), and the antioxidants (G-1) and (G-2) were prepared and weighed in the amount ratios shown in Tables 7 to 8. Next, these were mixed with the tumbler mixer to prepare the mixture. Then, the mixture was supplied to the biaxial screw vent type extruder and melt-kneaded to form the string-shaped molded product. After that, the string-shaped molded product was cut to prepare pellets, and the pellets were used as the molding material. In the manufacturing process, presence or absence of breakage (cutting) of the string-shaped molded product, biting property into the screw, and surface condition of the pellets (generation of voids, etc.) were visually observed. These evaluations are shown in the characteristics (moldability 1) of Tables 7 to 8.

Next, the molding material was supplied to the screw type injection molding machine and injection molded to produce the square type molded products (sliding members) having dimensions of 30 mm on a side and 3 mm in thickness. In the manufacturing process, releasability of the square type molded products from mold, and surface condition (peeling, etc.) of the square type molded products were visually observed. These evaluations are shown in the characteristics (moldability 2) of Tables 7 to 8. Further, the evaluation of the friction coefficient and the amount of wear of the square type molded products was performed based on the above described evaluation method. Results thereof are shown in the characteristics (sliding characteristics) of Tables 7 to 8.

### Examples 27 - 48

As nylon that is the main component, the plant-derived nylon (A-6), and as the additives, the polyethylene resins (B-3) and (B-4), the PTFE (C), the modified polyolefin resins (D-2), the phosphate (E-2), the lubricant (F-3), the antioxidants (G-1) and (G-2), and the organic particles or organic fibers (H-1) to (H-7) were prepared and weighed in the amount ratios shown in Tables 9 to 11. Next, these were mixed with the tumbler mixer to prepare the mixture. Then, the mixture was supplied to the biaxial screw vent type extruder and melt-kneaded to form the string-shaped molded product. After that, the string-shaped molded product was cut to prepare pellets, and the pellets were used as the molding material. In the manufacturing process, presence or absence of breakage (cutting) of the string-shaped molded product, biting property into the screw, and surface condition of the pellets (generation of voids, etc.) were visually observed. These evaluations are shown in the characteristics (moldability 1) of Tables 9 to 11.

Next, the molding material was supplied to the screw type injection molding machine and injection molded to produce the square type molded products (sliding members) having dimensions of 30 mm on a side and 3 mm in thickness. In the manufacturing process, releasability of the square type molded products from mold, and surface condition (peeling, etc.) of the square type molded products were visually observed. These evaluations are shown in the characteristics (moldability 2) of Tables 9 to 11. Further, the evaluation of the friction coefficient and the amount of wear of the square type molded products was performed based on the above described evaluation method. Results thereof are shown in the characteristics (sliding characteristics) of Tables 9 to 11.

### Comparative examples 1 to 8

As nylon that is the main component, the same as in the above mentioned examples (A-1), (A-2), (A-4), (A-5) and (A-6), and as the additives as the same as in the above mentioned examples, the polyethylene resins (B-1) to (B-4), the PTFE (C), the modified polyolefin resin (D-2), the phosphate (E-2), the lubricant (F-3), the antioxidants (G-1) and (G-2), and the meta-aramid particles (H-1), and further, molybdenum disulfide ("NICHIMOLY molybdenum disulfide powder" manufactured by Daizo Corporation), glass fiber ("03JAFT692" manufactured by Asahi Fiber Glass Co., Ltd.), potassium titanate whisker ("Tismo (product name)" manufactured by Otsuka Chemical Co., Ltd.), and mica were prepared and weighed in the amount ratios shown in Table 12. Next, these were mixed with the tumbler mixer to prepare the mixture. Then, the mixture was supplied to the biaxial screw vent type extruder and melt-kneaded to form the string-shaped molded product. After that, the string-shaped molded product was cut to prepare pellets, and the pellets were used as the molding material. In the manufacturing process, presence or absence of breakage (cutting) of the string-shaped molded product, biting property into the screw, and surface condition of the pellets (generation of voids, etc.) were visually observed. These evaluations are shown in the characteristics of Table 12.

Next, the molding material was supplied to the screw type injection molding machine and injection molded to produce the square type molded products (sliding members) having dimensions of 30 mm on a side and 3 mm in thickness. In the manufacturing process, releasability of the square type molded products from mold, and surface condition (peeling, etc.) of the square type molded products were visually observed. These evaluations are shown in the characteristics of Table 12. Further, the evaluation of the friction coefficient and the amount of wear of the square type molded products was performed based on the above described evaluation method. Results thereof are shown in the characteristics of Tables 12.

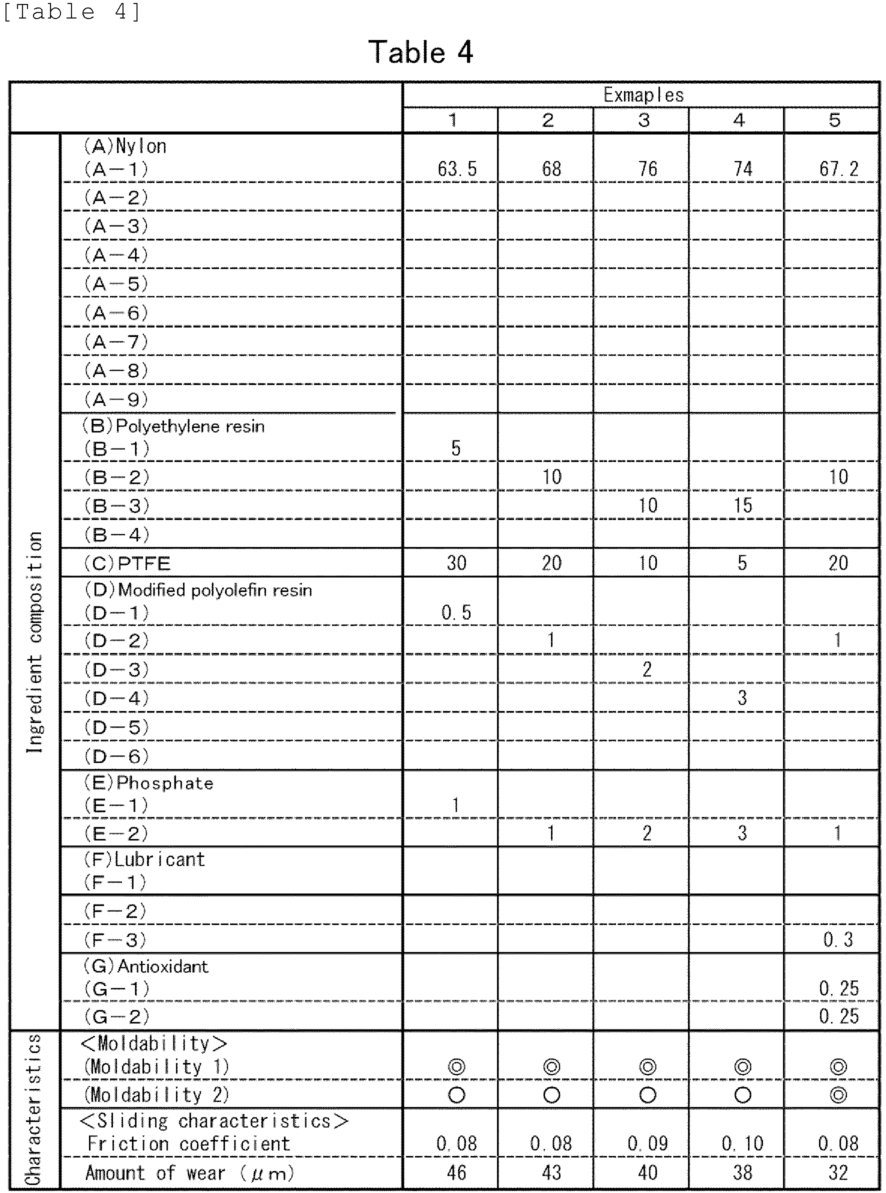

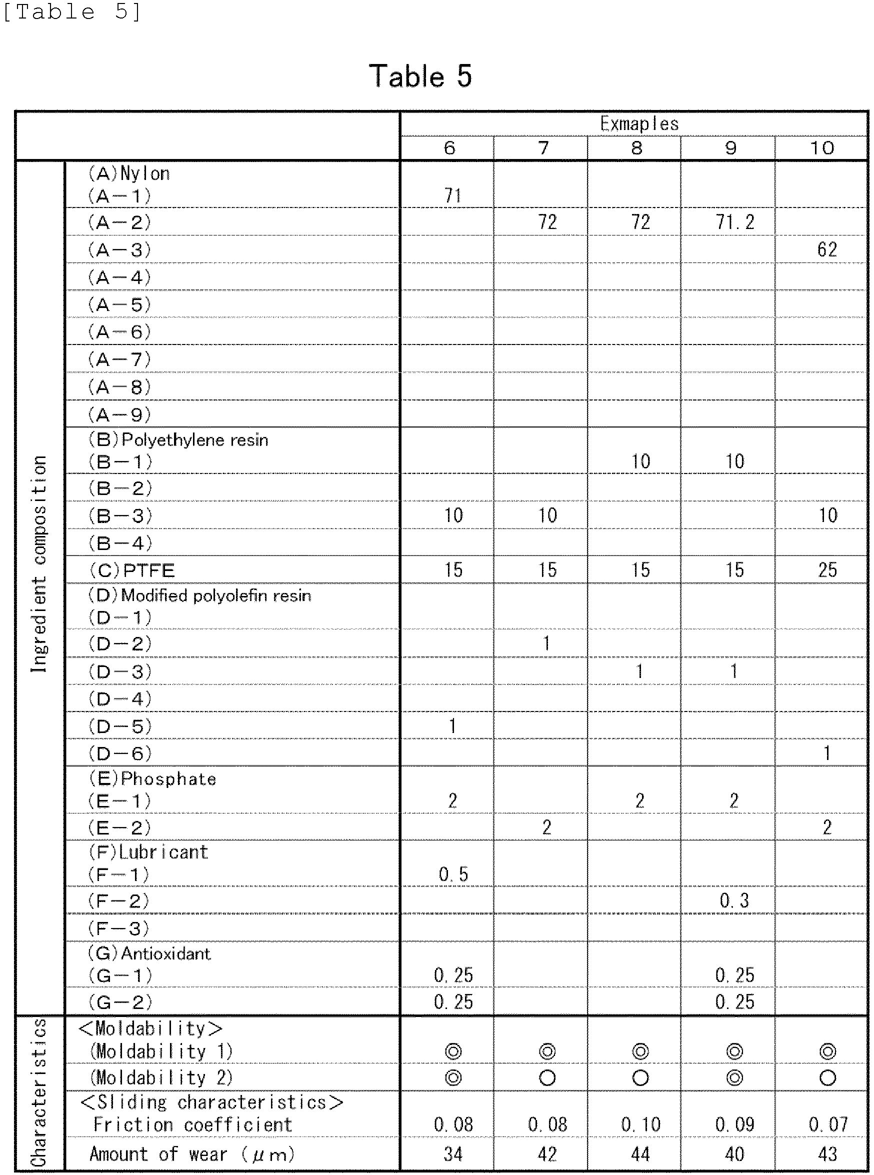

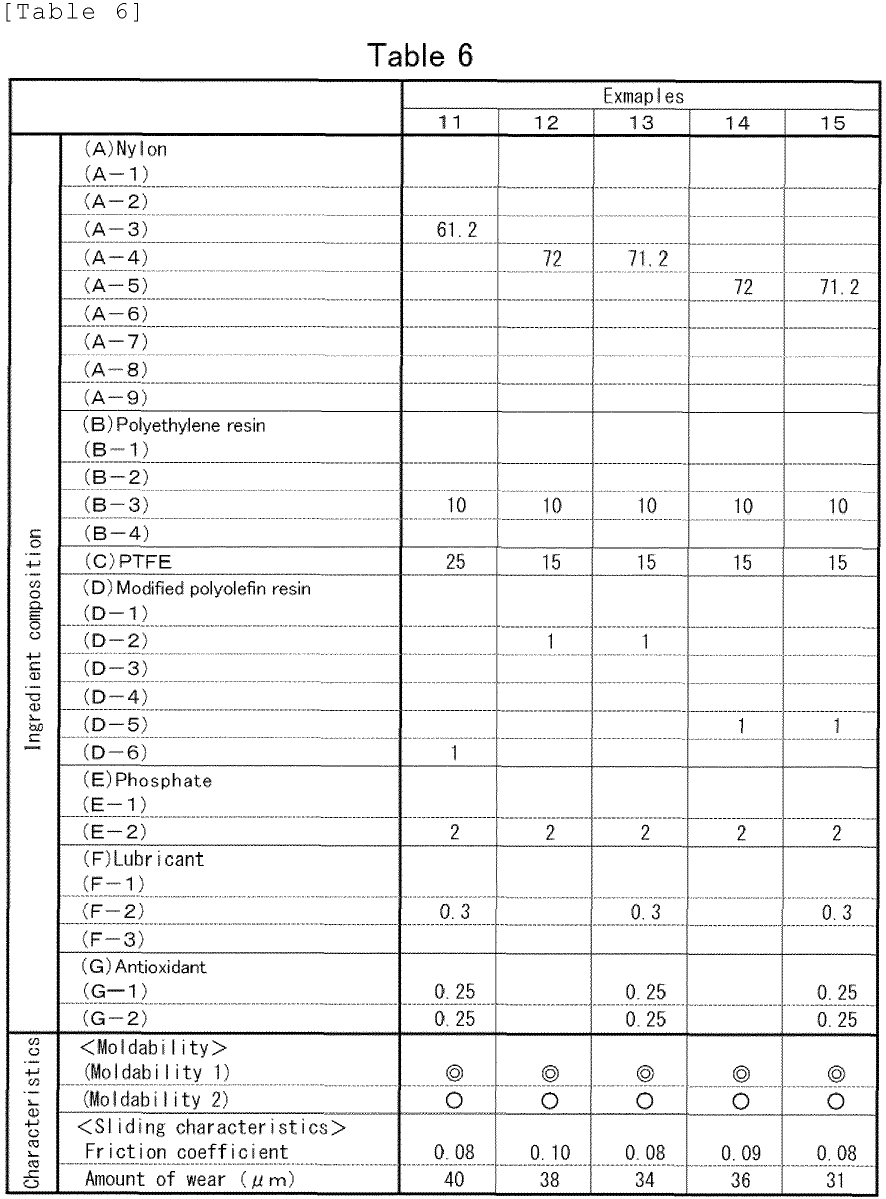

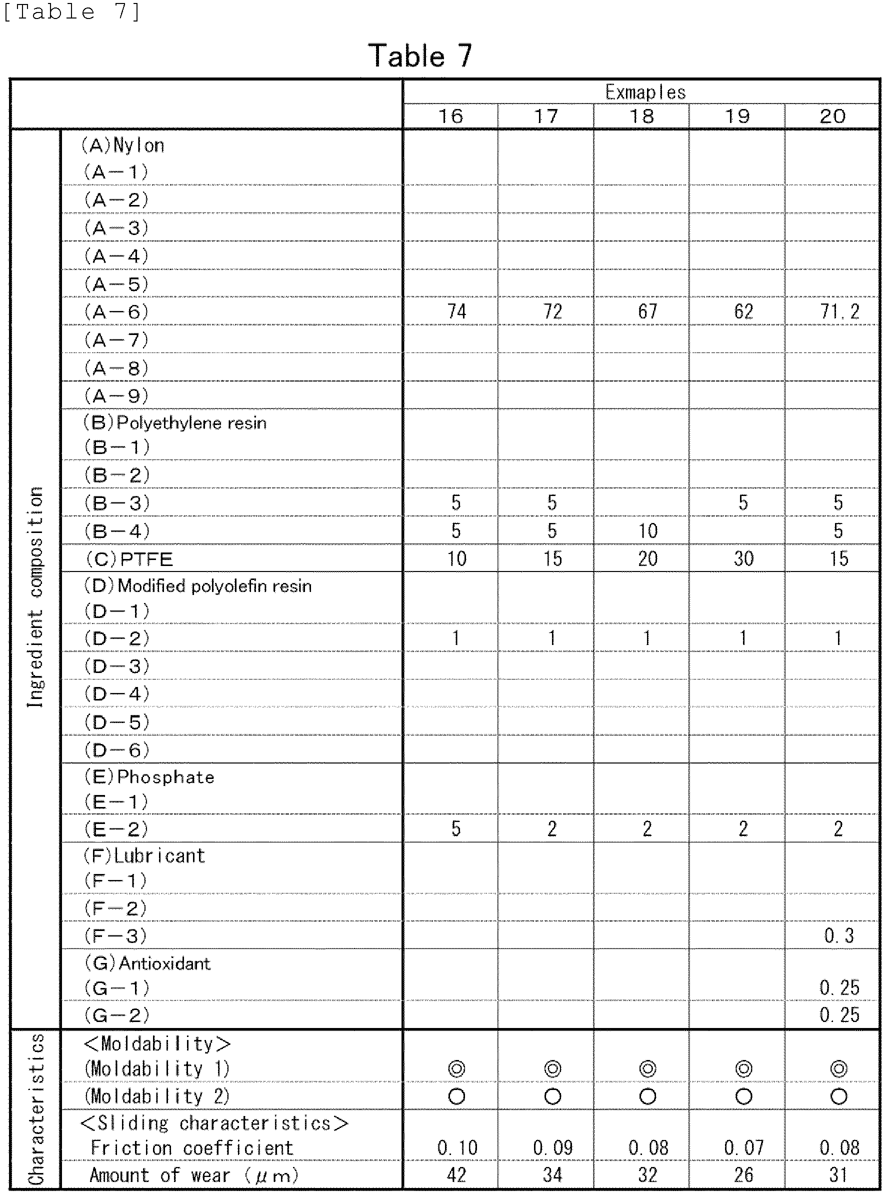

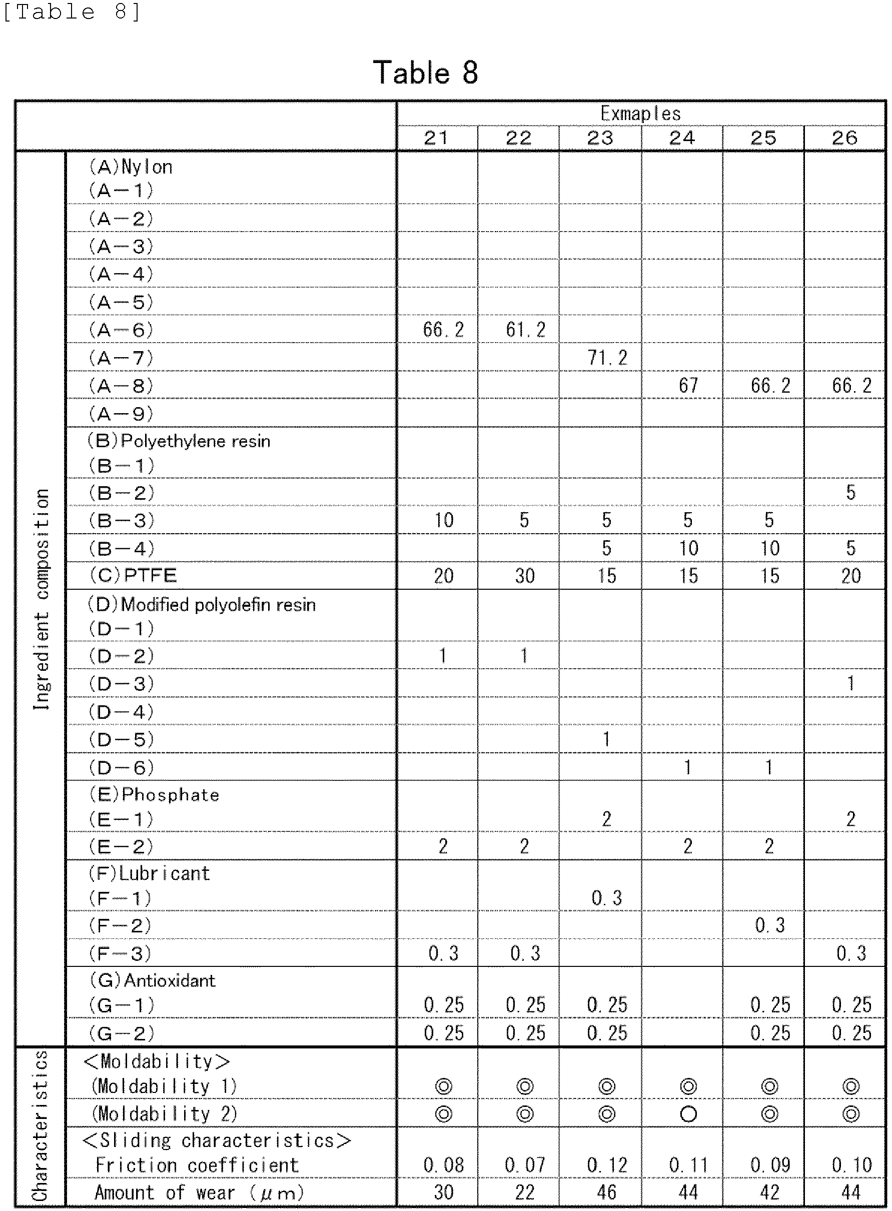

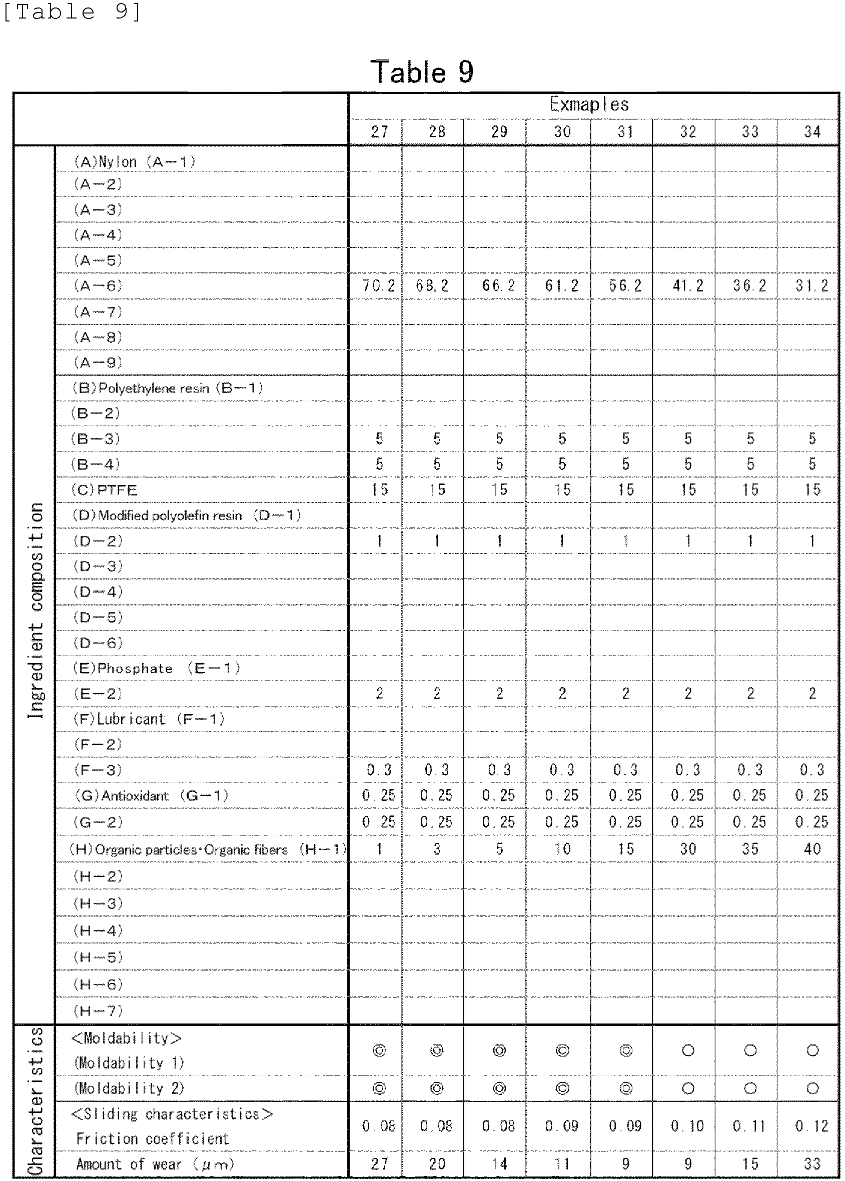

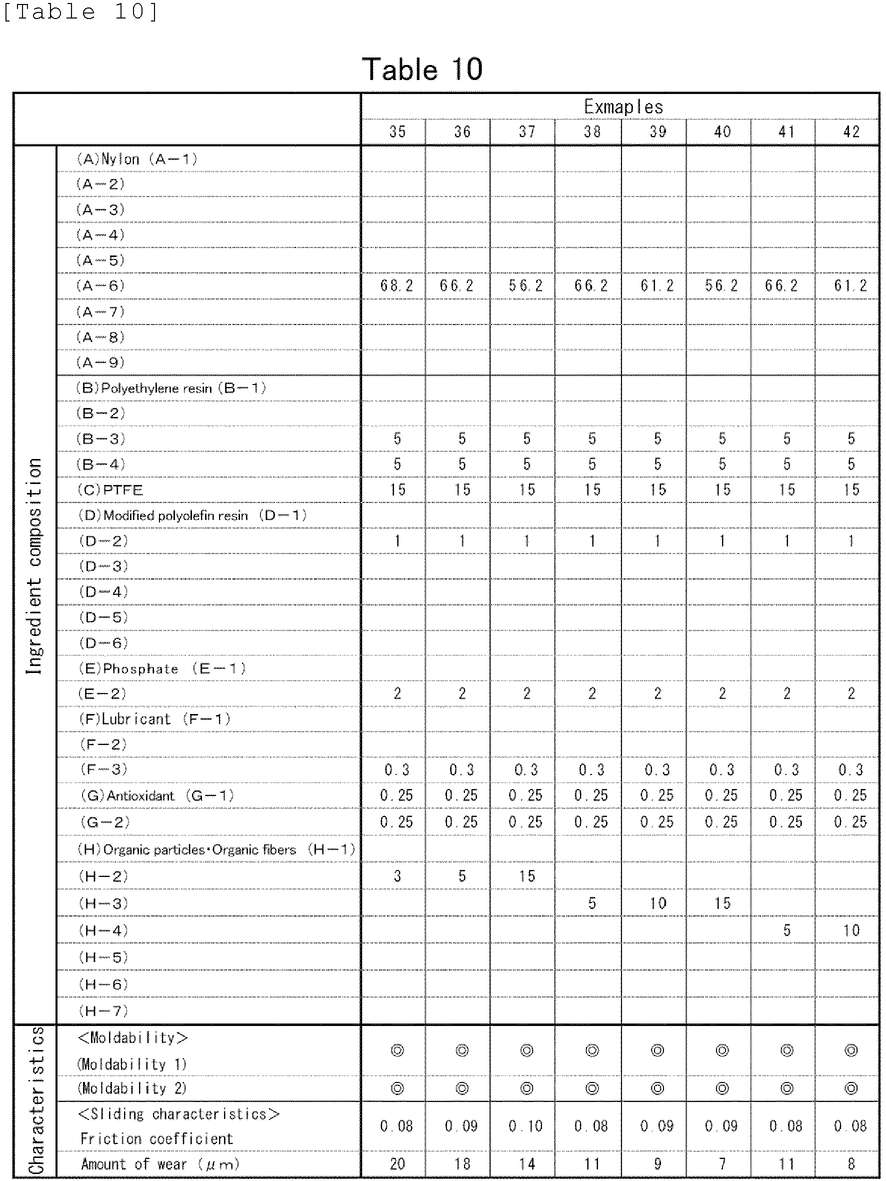

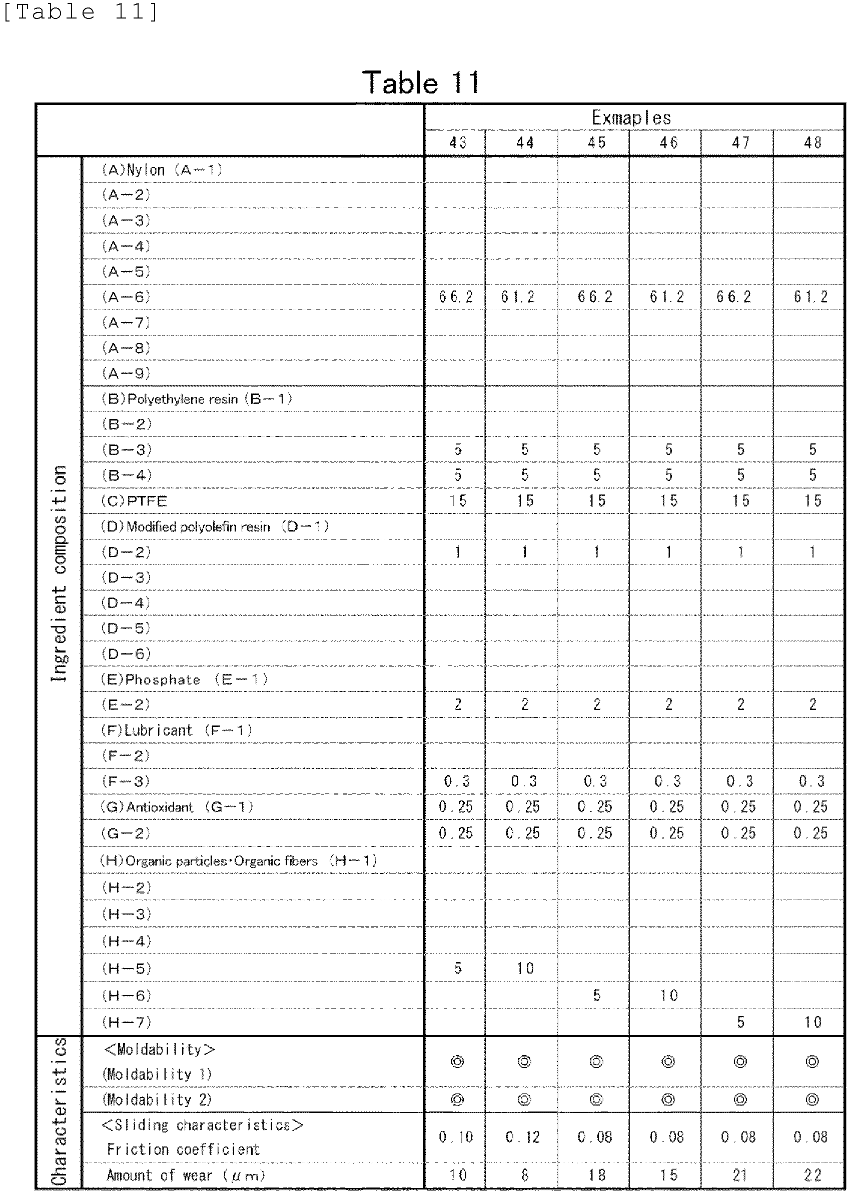

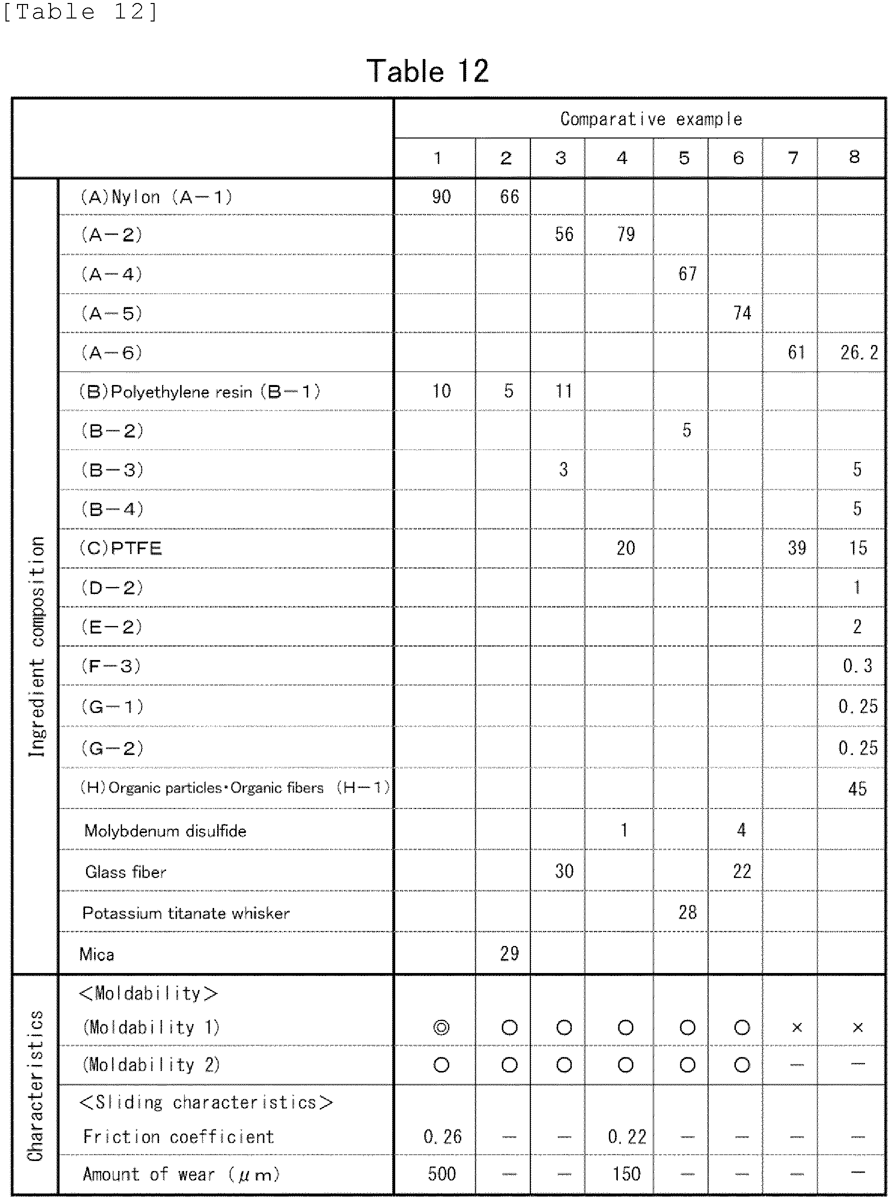

From the above test results, examples 1 - 48 of the nylon composition have good biting property into the screw in the extrusion molding. In addition, no breakage (cutting) of the string-shaped molded products is observed in the molding process of the string-shaped molded products. Further, it is confirmed that the molding materials (pellets) formed from the string-shaped molded products have good biting property into the screw of the injection molding machine and have excellent molding processability. In addition, it is confirmed that the surface of the molded products has no peeling and has an excellent surface condition. On the other hand, comparative examples 1 - 6 of the nylon composition have no particular problem in terms of moldability. However, as to comparative examples 7 and 8 of the nylon composition, breakage (cutting) of the string-shaped molded products was occurred in the extrusion molding and good string-shaped molded products could not obtained. Therefore, in comparative examples 7 and 8, evaluation (moldability 2) using the injection molding machine was not performed.

Further, examples 1 - 48 of the molded products (sliding members) made of the nylon composition all showed a low coefficient of friction and a small amount of wear. On the other hand, comparative examples 1 and 4 of the molded products (sliding members) made of the nylon composition showed a high coefficient of friction and a very large amount of wear. In comparative examples 2, 3, 5, and 6 of the molded products (sliding members) of the nylon composition, the test was discontinued because the friction coefficient increased during the test. In the case of comparative examples 7 and 8 of the nylon composition, the friction and wear characteristics were not tested because good molding materials could not be obtained. From the above, it can be seen that the molded products (sliding members) made of the nylon composition of examples have excellent sliding characteristics in comparison with the molded products (sliding members) made of the nylon composition of comparative examples.

As described above, the nylon composition and the sliding member of the present invention have good biting property into the screw and excellent molding processability. Further, the molded product has no peeling on the surface and has an excellent surface condition. In addition, according to the sliding member made of the nylon composition, the original mechanical properties of nylon are not impaired, and the sliding characteristics including low friction and wear resistance are significantly improved in the sliding friction with the opposite member. Therefore, according to the present invention, such the nylon composition and the sliding member can be provided.

### Reference Signs List

1 Bearing test piece (sliding member)
2 Cylinder (opposite member)
4 Axis

## Claims

1. A polyamide resin composition, containing:
as additives, polyethylene resin of 5 to 20% by mass, polytetrafluoroethylene resin of 5 to 30% by mass, modified polyolefin resin of 0.5 to 5% by mass, and phosphate of 1 to 5% by mass, in addition to polyamide resin that is a main component.

2. A polyamide resin composition according to Claim 1, wherein:
the polyamide resin is selected from aliphatic polyamide resin, semi-aromatic polyamide resin and plant-derived polyamide resin.

3. A polyamide resin composition according to Claim 1 or 2, wherein:
the polyethylene resin is selected from high-density polyethylene resin, ultra-high molecular weight polyethylene resin, and acid-modified ultra-high molecular weight polyethylene resin.

4. A polyamide resin composition according to any one of Claims 1 - 3, wherein:
the polytetrafluoroethylene resin is for lubricating additive.

5. A polyamide resin composition according to any one of Claims 1 - 4, wherein:
the modified polyolefin resin is selected from polyolefin resin graft-modified with unsaturated carboxylic acid, anhydride thereof or derivative thereof, and polyolefin resin saponified obtained by saponifying polyolefin resin having an acetoxy group in a molecular chain with alkali.

6. A polyamide resin composition according to Claim 5, wherein:
the polyolefin resin graft-modified with the unsaturated carboxylic acid, the anhydride thereof or the derivative thereof is selected from maleic anhydride-modified polyethylene resin, maleic anhydride-modified polypropylene resin, maleic anhydride-modified ethylene-α-olefin copolymer, and maleic anhydride-modified styrene-ethylene / butylene-styrene copolymer.

7. A polyamide resin composition according to Claim 5, wherein:
the polyolefin resin saponified consists of ethylene-vinyl acetate copolymer saponified.

8. A polyamide resin composition according to any one of Claims 1 - 7, wherein:
the phosphate is selected from orthophosphate of alkali metal or alkaline earth metal, pyrophosphate, and metaphosphate.

9. A polyamide resin composition for sliding member according to Claim 8, wherein:
the phosphate is selected from lithium tertiary phosphate, calcium tertiary phosphate, calcium hydrogenphosphate, magnesium hydrogenphosphate, lithium pyrophosphate, calcium pyrophosphate, magnesium pyrophosphate, lithium metaphosphate, calcium metaphosphate, and magnesium metaphosphate.

10. A polyamide resin composition according to any one of Claims 1 - 9, wherein:
as additive, organic particles or organic fibers is blended in a ratio of 1 to 40% by mass.

11. A polyamide resin composition according to any one of Claims 1 - 10, wherein:
as additive, lubricant selected from hydrocarbon-based wax, higher fatty acid metal salt and higher fatty acid amide is blended in a ratio of 0.1 to 1% by mass.

12. A polyamide resin composition according to any one of Claims 1 - 11, wherein:
as additive, antioxidant consists of phenolic-based antioxidant and/or phosphite-based antioxidant is blended in a ratio of 0.1 to 2% by mass.

13. A sliding member made of the polyamide resin composition according to any one of claims 1 to 12.
